**Europäisches Patentamt**

**European Patent Office**

**Office européen des brevets**

(11) Veröffentlichungsnummer: **0 172 487 B1**

(12) # EUROPÄISCHE PATENTSCHRIFT

(45) Veröffentlichungstag der Patentschrift:
07.12.88

(51) Int. Cl.⁴: **H 02 M 3/338**

(21) Anmeldenummer: 85109837.6

(22) Anmeldetag: 05.08.85

(54) Schaltnetzteil mit freischwingendem Durchflusswandler und galvanisch getrennter Regelschleife.

(30) Priorität: 07.08.84 DE 3429064

(43) Veröffentlichungstag der Anmeldung:
26.02.86 Patentblatt 86/9

(45) Bekanntmachung des Hinweises auf die Patenterteilung:
07.12.88 Patentblatt 88/49

(84) Benannte Vertragsstaaten:
CH DE FR GB IT LI NL SE

(56) Entgegenhaltungen:
EP-A- 0 035 156
DE-A- 2 919 905
GB-A- 2 069 256

Elektronik, Band 29, Nr. 6, März 1980, Seiten 92-96,
MÜNCHEN

(73) Patentinhaber: Siemens Aktiengesellschaft Berlin und München, Wittelsbacherplatz 2, D-8000 München 2 (DE)

(72) Erfinder: Stasch, Harald, Dipl.-Ing. (FH),
Ammerseestrasse 16, D-8027 Neuried (DE)
Erfinder: Schierjott, Rudolf, Dipl.-Ing. (FH),
Edlingerplatz 4, D-8000 München 90 (DE)

## Beschreibung

Die Erfindung betrifft ein Schaltnetzteil gemäss dem Oberbegriff des Patentanspruchs 1.

Schaltnetzteile werden heutzutage in grossem Umfang zur Stromversorgung verwendet, da sie gegenüber 50 Hz Netzteilen leichter und kleiner, sowie billiger herzustellen sind.

Allgemein bekannte Schaltnetzteile weisen einen Übertrager auf, dessen primärseitige Wicklung durch einen Schalttransistor mit Energie geladen und an dessen sekundärseitiger Wicklung bzw. Wicklungen diese Energie in Form einer oder mehrerer konstanter Spannungen entnommen wird. Der Übertrager ist hierbei Bestandteil eines Durchflusswandlers oder eines Sperrwandlers. Aufbau und Wirkungsweise dieser Wandlertypen sind in dem Buch «Schaltnetzteile» von Joachim Wüstehube, 1979, Expert-Verlag, Kapitel 2.1 ausführlich beschrieben.

Schaltnetzteile arbeiten meistens in einem Frequenzbereich von 16 bis 50 kHz. Da die auftretenden Strom- bzw. Spannungsverläufe grosse Überschwingungsanteile aufweisen, und zudem hohe Ströme und Spannungen geschaltet werden müssen, muss im Frequenzbereich oberhalb 150 kHz (Langwelle) noch mit erheblichen Störungen gerechnet werden. Für den Frequenzgang dieser Störungen gibt es bindende Vorschriften, soweit eine Ausbreitung in öffentlichen Netzen oder eine Ausstrahlung in den offenen Raum möglich sind.

Zur Unterdrückung von asymmetrischen Störspannungen im Netz weisen Übertrager in Schaltnetzteilen zwischen der primären und der sekundären Seite eine Schirmung auf. Die Schirmung besteht beispielsweise aus einer Kupferfolie, die isoliert über die Primärwicklung gelegt ist.

Sperrwandlernetzteile weisen einen Übertrager mit einem Luftspalt auf. Insbesondere bei hohen Leistungen entstehen in den Transformatorkernen der Übertrager und in der Schirmung hohe Wirbelstromverluste. Es ist deshalb allgemein üblich (siehe Wüstehube), statt der Kupferfolie zur Schirmung ein sog. Leitvlies zu verwenden. Die Herstellung eines solchen Übertragers für einen Sperrwandler ist daher aufwendig und teuer.

Die bekannten Durchflusswandler weisen im wesentlichen festtaktgesteuerte periodisch arbeitende Schalttransistoren, sowie einen Übertrager ohne Luftspalt auf, dessen Primärwicklung im Kollektorkreis des Schalttransistors liegt und an dessen Sekundärwicklung über eine Gleichrichter-Anordnung eine Gleichspannung abnehmbar ist. Da bei diesem Schaltprinzip mit einer vorgegebenen Schaltfrequenz gearbeitet wird, ist der Einschaltzeitpunkt des Schalttransistors vorbestimmt. Dieses Schaltprinzip weist den Nachteil auf, dass der Schalttransistor unter Strom eingeschaltet wird und eine Freilaufdiode im Sekundärkreis unter Strom in den gesperrten Zustand übergeht. Dies führt zu hohen Funkstörspannungen auf der Netzleitung. Wenn diese Umrichterschaltungen in Textendgeräten der Kommunikationstechnik mit galvanischer Trennung nach Schutzklasse 2, das heisst ohne Erdleiter eingesetzt werden, so können diese Geräte nicht auf den erforderlichen Funkstörpegel der Grenzwertklasse B entstört werden.

Es ist bekannt, bei Schaltnetzteilen zur Aufrechterhaltung der sekundärseitig abgegebenen Ausgangsspannung das Verhältnis von Einschalt- zu Ausschaltzeit bzw. das Verhältnis von Einschaltzeit zur Summe aus Einschalt- und Ausschaltzeit, das heisst das sogenannte Tastverhältnis, für den Schalttransistor zu regeln.

Aus der GB-A-2 069 259 ist eine Umrichterstromversorgung bekannt, die mit einem Durchflusswandler aufgebaut ist. Die Basis des darin enthaltenen Schalttransistors TR1 wird nur dann angesteuert, wenn der Übertrager T1 entmagnetisiert ist. Der Übertrager weist eine zusätzliche Wicklung zur Richtungsbestimmung des Spannungsverlaufes an der Primärwicklung T1a auf. Abhängig davon, ob die Spannung ihr Vorzeichen ändert, schaltet ein nachgeordneter Komparator in der Weise, dass der Schalttransistor TR1 gesperrt bleibt, solange der Übertrager noch magnetisiert ist.

In der Zeitschrift «ELEKTRONIK», Band 29, Nr. 6, März 1980, Seiten 92-96), München, R.J. Boschert: Schaltnetzteile nach dem Flyback-Verfahren, ist ein Netzteil nach dem Sperrwandlerprinzip beschrieben, das zur galvanischen Trennung des Regelkreises einen Optokoppler beinhaltet, der in Reihe mit einem einen Operationsverstärker mit hoher Verstärkung sowie eine Spannungsreferenzquelle enthaltenden integrierten Bauelement geschaltet ist und an den Ausgang des Sperrwandlers angeschlossen ist.

Es ist Aufgabe der Erfindung ein Schaltnetzteil mit galvanischer Trennung anzugeben, bei dem nur geringe Störimpulse auf den Anschlussleitungen auftreten und das einen Übertrager mit geringen Wirbelstromverlusten aufweist und das eine geregelte Ausgangsspannung abgibt.

Diese Aufgabe wird erfindungsgemäss durch die im kennzeichnenden Teil des Patentanspruchs 1 angegebenen Merkmale gelöst.

Ein Vorteil des erfindungsgemässen Schaltnetzteils liegt darin, dass der freischwingende Durchflussumrichter einen dreieckförmigen Kollektorstrom im Schalttransistor bewirkt, wodurch der Umrichter leicht entstörbar ist.

Dadurch, dass der Schalttransistor nicht unter Strom eingeschaltet wird, sind die Schaltverluste reduziert.

Dadurch, dass das erfindungsgemässe Schaltnetzteil einen Durchflussumrichter aufweist, kann zur Schirmung der Primärwicklung des Übertragers eine einfach zu verarbeitende Metallfolie verwendet werden.

Besonders vorteilhaft ist die Verwendung eines Optokopplers zur Realisierung einer galvanisch getrennten Regelschleife über die das Tastverhältnis für den Schalttransistor zur Aufrechterhaltung einer konstanten Ausgangsgleichspannung geregelt wird.

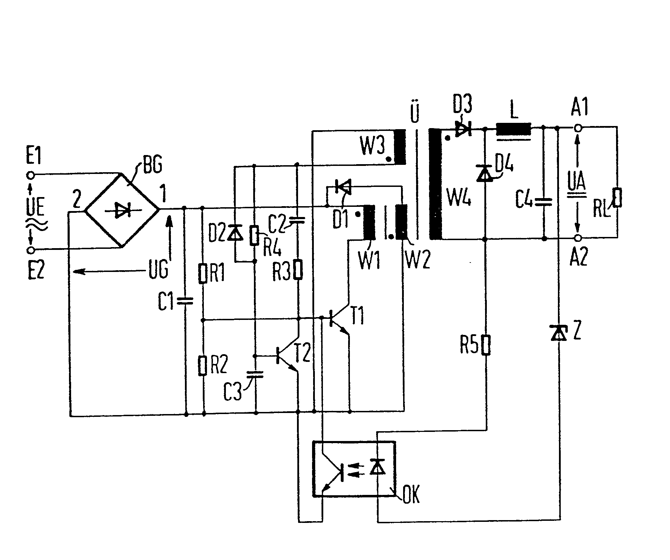

Im folgenden wird die Erfindung anhand eines in der Zeichnung dargestellten Ausführungsbeispieles beschrieben.

Das in der Zeichnung dargestellte Schaltnetzteil weist einen Durchflusswandler mit zwei Eingangsklemmen E1, E2 auf, an denen eine Eingangswechselspannung UE anliegt. Ein Brückengleichrichter BG wandelt diese Eingangswechselspannung UE in eine Gleichspannung UG um, und gibt diese an zwei Klemmen 1,2 ab, wobei an der Klemme 1 ein gegenüber der Klemme 2 positives Potential abgegeben wird. Die Gleichspannung UG wird von einem zwischen die Klemmen 1 und 2 geschalteten Kondensator C1 geglättet. Zwischen die Klemmen 1 und 2 sind weiter eine Serienschaltung aus zwei Widerständen R1 und R2, und die Serienschaltung aus einer Primärwicklung W1 und der Kollektoremitterstrecke eines Schalttransistors T1 geschaltet. Ein nicht näher bezeichneter Spannungsteilerpunkt zwischen den Widerständen R1 und R2 ist mit der Basis des Schalttransistors T1 verbunden.

Die Primärwicklung W1, eine Entmagnetisierungswicklung W2, eine Steuerwicklung W3 und eine Sekundärwicklung W4 sind Bestandteile eines Übertragers Ü. Die Primärwicklung W1 und die Sekundärwicklung W4 weisen jeweils den gleichen, die Steuerwicklung W3 und die Entmagnetisierungswicklung W2 den entgegengesetzten Wicklungssinn auf. Die Entmagnetisierungswicklung W2, ist in Serienschaltung mit einer Diode D1 zwischen die beiden Klemmen 1 und 2 geschaltet, wobei die Kathode der Diode D1 mit der Klemme 1 verbunden ist.

Zwischen die Basis des Schalttransistors T1 und die Klemme 2 sind die Kollektoremitterstrecke eines Steuertransitors T', sowie die Kollektoremitterstrecke des Fototransistors eines Optokopplers OK geschaltet. Die Basis des Steuertransistors T2 ist über einen Kondensator C3, und über die Serienschaltung aus einem Widerstand R4 und der Steuerwicklung W3 mit der Klemme 2 verbunden. Dem Widerstand R4 ist eine Diode D2 parallel geschaltet, deren Anode mit der Basis des Steuertransistors T2 verbunden ist. Die Kathode der Diode D2 ist über die Serienschaltung aus einem Kondensator C2 und einem Widerstand R3 mit der Basis des Schalttransistors T1 verbunden.

Der Widerstand R3 bildet zusammen mit dem Kondensator C2 eine Einschaltstufe, und der Kondensator C3 mit dem Widerstand R4 und dem Steuertransistor T2 sowie der Diode D2 eine Ausschaltstufe für den Schalttransistor T1.

Das eine Ende der Sekundärwicklung W4 ist über eine Gleichrichterdiode D3 und eine Induktivität L mit einer Ausgangsklemme A1 verbunden. Das andere Ende der Sekundärwicklung W4 ist direkt mit einer Ausgangsklemme A2 verbunden, die über eine in Flussrichtung gepolte Freilaufdiode D4 mit der Kathode der Gleichrichterdiode D3 verbunden ist. Zur Glättung einer an den Ausgangsklemmen A1, A2 abgreifbaren Ausgangsgleichspannung UA ist zwischen diese ein Kondensator C4 geschaltet. Zwischen die Ausgangsklemmen A1 und A2 sind weiter ein Lastwiderstand RL, der symbolisch einen externen Verbraucher darstellt, sowie eine in Sperrichtung gepolte Zenerdiode Z, die in Flussrichtung gepolte Leuchtdiode des Optokopplers OK, und ein Widerstand R5 geschaltet.

Im folgenden wird die Wirkungsweise des erfindungsgemässen Schaltnetzteils beschrieben.

Die gleichgerichtete Eingangswechselspannung UE, das heisst die Gleichspannung UG wird mit der Primärwicklung W1 des Übertragers Ü und dem Schalttransistor T1 in eine getaktete Spannung umgeformt. Beim Einschalten des Schaltnetzteils wird der Kondensator C2 über die Widerstände R1 und R3 und über die Steuerwicklung W3 aufgeladen. Wenn die Schwellwertspannung an der Basis des Schalttransistors T1 erreicht ist, wird dieser leitend geschaltet und der Durchflusswandler beginnt zu arbeiten.

Während der Leitendphase des Schaltransistors T1 wird Energie auf die Sekundärseite des Übertragers U übertragen. Zugleich ist die Gleichrichterdiose D3 leitend und die Freilaufdiode D4 gesperrt. Ein dabei durch die Induktivität L fliessender Strom ermöglichst es an dem Kondensator C4 die Ausgangsgleichspannung UA abzunehmen. Während der Strom fliesst nimmt nicht nur der Lastwiderstand RL Energie auf, sondern auch die Induktivität L, die sie als magnetische Energie speichert. Der Spitzenwert des Stromes im Primärkreis ist durch die Induktivität L, durch die Summe der Verlustwiderstände im Primär- und Sekundärkreis, durch die Einschaltdauer des Schalttransistors T1, und durch den Wert der Ausgangsgleichspannung UA bestimmt.

Ebenfalls während der Leitendphase des Schalttransistors T1 wird auf der Primärseite des Übertragers Ü der Kondensator C3 durch den in der Steuerwicklung W3 induzierten Strom über den Widerstand R4 aufgeladen. Die Leitendphase des Schalttransistors T1 wird durch zwei Schaltvorgänge beendet. Einerseits wird nach Aufladung des Kondensator C3 auf die Schwellwertspannung der Basis des Steuertransistors T2, dieser impulsartig leitend geschaltet und der Schalttransistor T1 gesperrt. Andererseits wird zur Einhaltung eines konstanten Wertes der Ausgangsgleichspannung UA, der im wesentlichen durch die Zenerdiode Z bestimmt ist, bei Überschreitung dieses Wertes der Fototransistor des Optokopplers OK leitend geschaltet und der Schaltransistor T1 gesperrt.

Die Einschaltdauer des Schalttransistors T1 ist also im wesentlichen durch die Zeitkonstante, gebildet aus dem Widerstand R4 und dem Kondensator C3, bzw. dem Wert der Ausgangsgleichspannung UA bestimmt. Während der Sperrphase des Schalttransistors T1 liegt an dessen Basis eine negative Spannung bezogen auf das an der Klemme 2 des Brückengleichrichters BG abgreifbare Potential. Diese Spannungsumkehr an der Basis des Schalttransistors T1 wird bewirkt durch die Umkehr der an der Steuerwicklung W3 abgreifbaren Spannung. Der Sperrvorgang im Schalttransistor wird über den Steuertransistor T2 oder den Fototransistor des Optokopplers OK eingeleitet, und über die Steuerwicklung W3 während der Entmagnetisierung aufrechtgehalten.

Während der Sperrphase des Schalttransistors T1 ist auf der Sekundärseite des Übertragers Ü die Gleichrichterdiode D3 in Rückwärtsrichtung gepolt und daher stromlos. Aufgrund der in der Induktivität L gespeicherten Energie fliesst der Strom durch diese, den Lastwiderstand RL und die jetzt leitende Freilaufdiode D4 in gleicher Richtung weiter.

Die während der Leitendphase des Schalttransistors T1 vom Transformatorkern des Übertragers Ü aufgenommene Magnetisierungsenergie fliesst während der Sperrphase des Schalttransistors T1 über die Entmagnetisierungswicklung W2 und die Diode D1 als elektrischer Strom in die Spannungsquelle, das heisst in den Kondensator 1 zurück. Nach der Entmagnetisierung des Übertragers Ü und im stromlosen Zustand der Freilaufdiode D4 wird der Schalttransistor T1 erneut leitend geschaltet. Die während der Sperrphase des Schalttransistors T1 an dessen Basis anliegende negative Spannung ist nach der Entmagnetisierung abgebaut. Über den Widerstand R3 und die Steuerwicklung W3 wird der Kondensator C2 wieder aufgeladen und der Schalttransistor T1 erneut leitend geschaltet. Die Diode D2 dient zum schlagartigen Entladen des Kondensators C3 zu Beginn der Sperrphase des Schalttransistors T1.

Der dem erfindungsgemässen Schaltnetzteiles zugrundeliegende Gedanke ist, dass der Einschaltzeitpunkt des Schalttransistors T1 und somit seine Schaltfrequenz nicht fest vorgegeben sind. Der Schalttransistor T1 wird nach der Entmagnetisierung des Übertragers Ü und im stromlosen Zustand der Freilaufdiode D4 selbständig wieder eingeschaltet. Dadurch ist sichergestellt, dass der Schalttransistor T1 nicht unter Strom eingeschaltet wird, und dass ein dreieckförmiger Kollektorstrom im Primärkreis fliesst, der leicht entstörbar ist.

Im erfindungsgemässen Schaltnetzteil wird der Schalttransistor T1 für eine Zeit leitend geschaltet, die durch den Wert der Ausgangsgleichspannung UA bestimmt ist, d.h. das Tastverhältnis für den Schalttransistor T1 wird entsprechend dem Wert der Ausgangsgleichspannung UA geregelt. Der Maximalwert der Einschaltdauer des Schalttransistors T1 ist durch den Widerstand R4 und den Kondensator C3 vorgegeben.

Nach dieser Einschaltdauer, d.h. während der Sperrphase des Schalttransistors T1 wird der Übertrager Ü entmagnetisiert. Nach der Entmagnetisierung und daher im stromlosen Zustand der Freilaufdiose D4 wird der Schalttransistor T1 erneut eingeschaltet. Das Ende der Entmagnetisierung wird dabei im wesentlichen über die Steuerwicklung W3 erkannt.

Als Schalttransistor T1 ist im erfindungsgemässen Schaltnetzteil jedes steuerbare Halbleiterschaltelement verwendbar.

Der Opokoppler OK dient im erfindungsgemässen Schaltnetzteil zur Realisierung einer galvanisch getrennten Regelschleife zwischen Primär- und Sekundärseite. Stattdessen können auch Übertrager oder Piezokeramiken verwendet werden.

Bezugszeichenliste

| | |
|---|---|
| T1 | Schalttransistor |
| T2 | Steuertransistor |
| W1 | Primärwicklung |
| W2 | Entmagnetisierungswicklung |
| W3 | Steuerwicklung |
| W4 | Sekundärwicklung |
| Ü | Übertrager |
| BG | Brückengleichrichter |
| UE | Eingangswechselspannung |
| UA | Ausgangsgleichspannung |
| D1, D2 | Dioden |
| D3 | Gleichrichterdiode |
| D4 | Freilaufdiode |
| L | Induktivität |
| RL | Lastwiderstand |
| E1, E2 | Eingangsklemmen |
| A1, A2 | Ausgangsklemmen |
| UG | Gleichspannung |
| C1 bis C4 | Kondensator |
| R1 bis R5 | Widerstände |
| Z | Zenerdiode |
| OK | Optokoppler |

Patentansprüche

1. Schaltnetzteil mit einer Gleichrichteranordnung (BG) zur Erzeugung einer Gleichspannung (UG) aus einer Eingangswechselspannung (UE), und mit einer einen Schalttransistor (TI) und einen Übertrager (Ü) aufweisenden freischwingenden Durchflussumrichter mit einer Steuerwicklung (W3) und einer Entmagnetisierungswicklung (W2), der sekundärseitig eine Gleichrichterdiode (D2), eine Induktivität (L), eine Freilaufdiode (D4) und einen Glättungskondensator (C) sowie eine galvanisch getrennte Regelschleife aufweist, dadurch gekennzeichnet, dass eine aus einem Widerstand (R3) und einem in Serie geschalteten Kondensator (C2) bestehende Einschaltstufe vorgesehen ist, die den Schalttransistor (T1) nach der Entmagnetisierung des Übertragers (Ü) und im stromlosen Zustand der Induktivität (L) selbständig über die Steuerwicklung (W3) leitend schaltet, und nach einer vorgebbaren Einschaltdauer durch den in der Steuerwicklung (W3) induzierten Strom über eine aus einem Steuertransistor (T2), einem zwischen dem Basisanschluss und dem Emitteranschluss des Steuertransistors (T2) geschalteten Kondensator (C3) und einem in Serie zur Steuerwicklung (W3) liegenden Widerstand (R4) bestehende Ausschaltstufe gesperrt wird.

2. Schaltnetzteil nach Anspruch 1, dadurch gekennzeichnet, dass die Einschaltdauer durch die Zeitkonstante aus dem Wert des Widerstandes (R4) und der Kapazität des Kondensators (C3) bestimmt ist.

3. Schaltnetzteil nach Anspruch 1 oder 2, dadurch gekennzeichnet, dass dem Widerstand (R4) eine Diode (D2) parallel geschaltet ist, die zu Beginn der Entmagnetisierung des Übertragers (Ü) den Kondensator (C3) schlagartig entlädt.

4. Schaltnetzteil nach einem der Ansprüche 1 bis 3, dadurch gekennzeichnet, dass die galvanisch getrennte Regelschleife einen Optokoppler (OK) enthält, dessen Eingangsklemmen mit dem Ausgang des Schaltnetzteils verbunden sind und dessen eine Ausgangsklemme (Kollektor des Fototransistors) unmittelbar mit der Basis des Schalttransistors (T1) und dessen andere Ausgangsklemme (Emitter des Fototransistors) unmittelbar mit dem Emitter des Steuertransistors (T2) verbunden ist.

## Claims

1. Switched-mode power supply comprising a rectifier arrangement (BG) for generating a direct voltage (UG) from an alternating input voltage (UE), and having a free-oscillating forward converter, which exhibits a switching transistor (T1) and a transformer (Ü), with a control winding (W3) and a demagnetizing winding (W2), which exhibits a rectifier diode (D2), an inductance (L), a free-wheeling diode (D4) and a smoothing capacitor (C) and an electrically isolated control loop on the secondary side, characterized in that a turn-on stage consisting of a resistor (R3) and a series-connected capacitor (C2) is provided which automatically switches the switching transistor (T1) into the conducting state after demagnetization of the transformer (Ü) and in the current-less state of the inductance (L) via the control winding (W3), and, after a predeterminable turn-on time, is blocked by the current induced in the control winding (W3) via a turn-off stage consisting of a control transistor (T2), a capacitor (C3) connected between the base terminal and the emitter terminal of the control transistor (T2) and a resistor (R4) connected in series with the control winding (W3).

2. Switched-mode power supply according to Claim 1, characterized in that the turn-on time is determined by the time constant from the value of the resistor (R4) and the capacitance of the capacitor (C3).

3. Switched-mode power supply according to Claim 1 or 2, characterized in that a diode (D2), which abruptly discharges the capacitor (C3) at the beginning of the demagnetization of the transformer (Ü), is connected in parallel with the resistor (R4).

4. Switched-mode power supply according to one of Claims 1 to 3, characterized in that the electrically isolated control loop contains an optocoupler (OK), the input terminals of which are connected to the output of the switched-mode power supply and one output terminal of which (collector of the phototransistor) is directly connected to the base of the switching transistor (T1) and the other output terminal of which (emitter of the phototransistor) is directly connected to the emitter of the control transistor (T2).

## Revendications

1. Bloc d'alimentation commutable comprenant un dispositif redresseur (BG) pour générer une tension continue (UG) à partir d'une tension d'entrée alternative (UE) ainsi qu'un convertisseur direct autooscillant, comportant un transistor de commutation (T1) et un translateur (Ü) avec un enroulement de commande (W3) et un enroulement de désaimantation (W2), qui présente côté secondaire une diode de redressement (D2), une inductance (L), une diode de roue libre (D4) et un condensateur de lissage (C4) de même qu'une boucle de régulation séparée galvaniquement, caractérisé en ce qu'il comporte un étage d'entrée, constitué d'une résistance (R3) et d'un condensateur (C2) monté en série, qui, après la désaimantation du translateur (Ü) et alors que l'inductance (L) n'est pas traversée par un courant, rend le transistor de commutation (T1) automatiquement conducteur à travers l'enroulement de commande (W3), le transistor de commutation étant bloqué, après une durée d'enclenchement pouvant être préfixée, par le courant induit dans l'enroulement de commande (W3), au moyen d'un étage de coupure constitué d'un transistor de commande (T2), d'un condensateur (C3) branché entre la connexion de base et la connexion d'émetteur du transistor de commande (T2), ainsi que d'une résistance (R4) montée en série avec l'enroulement de commande (W3).

2. Bloc d'alimentation selon la revendication 1, caractérisé en ce que la durée d'enclenchement est fixée par la constante de temps découlant de la valeur de la résistance (R4) et de la capacité du condensateur (C3).

3. Bloc d'alimentation selon la revendication 1 ou 2, caractérisé en ce qu'une diode (D2), montée en parallèle avec la résistance (R4), décharge brusquement le condensateur (C3) au début de la désaimantation du translateur (Ü).

4. Bloc d'alimentation selon une des revendications 1 à 3, caractérisé en ce que la boucle de régulation séparée galvaniquement contient un coupleur opto-électronique (OK) dont les bornes d'entrée sont connectées à la sortie du bloc d'alimentation commutable, dont une borne de sortie (collecteur du phototransistor) est reliée directement à la base du transistor de commutation (T1) et dont l'autre borne de sortie (émetteur du phototransistor) est reliée directement à l'émetteur du transistor de commande (T2).